# FASCICULE DE BREVET EUROPEEN

(11) **EP 0 604 254 B1**
(45) Date de publication et mention de la délivrance du brevet: **06.03.1996**
(21) Numéro de dépôt: 93402908.3
(22) Date de dépôt: 01.12.1993
(51) Int. Cl.: A01N 1/02

(54) **Canister pour paillettes**
Kanister für Röhrchen
Canister for spangles

(30) Priorité: 22.12.1992 FR 9215455
(43) Date de publication de la demande: 29.06.1994
(73) Titulaire: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Delatte, Daniel, F-94100 Saint Maur (FR); Klok, Cornélis, F-94370 Noiseau (FR)
(74) Mandataire: Le Moenner, Gabriel

(56) Documents cités:
- EP-A- 0 026 691

## Description

La présente invention concerne les canisters destinés à contenir des éprouvettes ou des paillettes en vue de leur maintien dans un récipient rempli d'un liquide de conservation froid, du type comprenant un réceptacle ayant une ouverture supérieure, une zone d'extrémité inférieure ajourée et une tige de support et de préhension.

Un canister de ce type est décrit dans le document EP-A-0.026.691, au nom de la Demanderesse.

La conservation de nombreux produits et échantillons biologiques, en particulier sous forme de tubes fins et fermés appelés "paillettes", d'une capacité usuelle variant entre 0,25 et 0,5 cm³, se fait en immergeant ces paillettes dans des récipients isolés, typiquement à double paroi, remplis d'un liquide cryogénique, typiquement de l'azote liquide. Ces récipients ont une capacité qui peut varier de 1 litre à plus de 1000 litres et contenir un nombre variable de paillettes, allant d'une cinquantaine à plus d'un million. Les paillettes ne sont pas introduites en vrac dans les récipients mais elles peuvent être groupées dans des conteneurs intermédiaires appelés "canisters", conformes à la présente invention, pouvant contenir un nombre de paillettes variant d'une cinquantaine à 2000 environ, selon les dimensions des paillettes et des canisters.

Lorsqu'on introduit un canister, préalablement chargé de paillettes, dans un récipient rempli de gaz cryogénique liquéfié, ce dernier pénètre dans le canister par son extrémité inférieure, ajourée, et peut, si le canister est enfoncé rapidement dans le liquide, provoquer un soulèvement important des paillettes par rapport au canister avec les risques de les voir sortir du canister par le haut et de se disperser dans le liquide dans le récipient. Par ailleurs, il est souhaitable de mettre en place rapidement le canister dans le bain de gaz liquéfié pour éviter les pertes de froid et une vaporisation excessive de ce dernier.

La présente invention a pour objet de proposer une structure de canister permettant d'immerger rapidement le canister dans un liquide de conservation froid sans risque d'échappement des paillettes hors du canister.

Pour ce faire, selon une caractéristique de l'invention, le canister comporte un couvercle supporté par un support monté sur la tige et déplaçable entre une première position, dite de fermeture, en regard de l'ouverture, et une deuxième position dégageant l'ouverture.

Selon d'autres caractéristiques de l'invention :
- le support de couvercle est monté par accrochage sur la tige ;
- il est prévu des moyens, déverrouillables manuellement, de blocage du couvercle dans sa première position ;
- le couvercle est monté à pivotement sur le support autour d'un pivot d'axe parallèle à la tige et avantageusement monté dans une première extrémité latérale du support.

Avec cet agencement, le couvercle peut être aisément placé dans sa deuxième position pour la mise en place des paillettes dans le canister ou leur extraction de ce dernier, après quoi le couvercle est, également aisément, placé dans sa position dite de fermeture, en regard de l'ouverture du réceptacle, au-dessus de cette dernière et des extrémités débordantes des paillettes qu'il maintient ainsi en place dans le réceptacle tout en permettant le passage de gaz ou de liquide dans le réceptacle et hors de celui-ci. Le couvercle n'a en effet pas de fonction d'étanchéité et assure uniquement une fonction de rétention des paillettes dans le réceptacle. La longueur des paillettes et le rapport diamètre/hauteur du réceptacle empêchent les paillettes de faire un angle important avec l'axe du canister et il suffit donc que le couvercle déborde très légèrement latéralement au-delà des dimensions de l'ouverture supérieure du canister.

D'autres caractéristiques et avantages de la présente invention ressortiront de la description suivante d'un mode de réalisation donné à titre illustratif mais nullement limitatif, faite en relation avec les dessins annexés, sur lesquels :
- la figure 1 est une vue d'ensemble, en élévation, d'un canister selon l'invention avec le couvercle en position de fermeture ;
- la figure 2 est une autre vue en élévation suivant une direction perpendiculaire à celle de la figure 1 ;
- la figure 3 est une vue de détail du canister et du couvercle, correspondant à un agrandissement de la partie centrale de la figure 2 ;
- la figure 4 est une vue en coupe suivant le plan de coupe IV-IV de la figure 3 ;
- la figure 5 est une vue analogue à celle de la figure 4 mais avec le couvercle en position d'ouverture ; et
- la figure 6 est une vue en perspective du support de couvercle des figures 1 à 5.

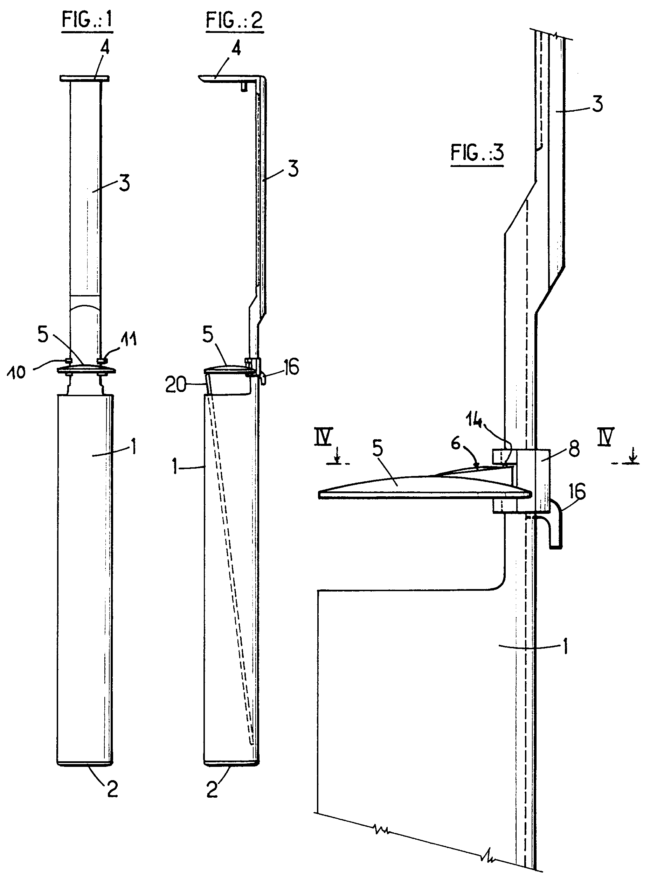

On reconnaît sur les figures 1 à 3 un canister comprenant un réceptacle allongé 1, typiquement de forme tubulaire, dont le fond est fermé par une plaque ajourée ou perforée 2 et qui est prolongé, vers le haut, par une tige ou languette 3 pourvue, à son extrémité supérieure, d'une patte transversale 4 pour l'accrochage du canister dans un col d'un récipient cryobiologique. Le réceptacle 1 et la tige 3, ainsi qu'éventuellement le fond 2, sont avantageusement réalisés d'une seule pièce en matériau plastique. lls peuvent toutefois être constitués par des éléments métalliques assemblés, par exemple soudés.

Selon l'invention, sur la partie inférieure de la tige 3, est monté, au moyen d'un support 8, un couvercle 5 présentant une allure générale en forme de disque bombé vers le haut, de diamètre légèrement supérieur au diamètre de l'ouverture supérieure 50 du réceptacle 1. Le couvercle 5 et le support 8 sont avantageusement réalisés en un matériau plastique élastique ou semi-rigide. La face supérieure du couvercle 5 comporte une nervure sensiblement radiale 6 qui s'étend au-delà de la périphérie du disque 5 et dont l'extrémité extérieure est traversée par un perçage 7.

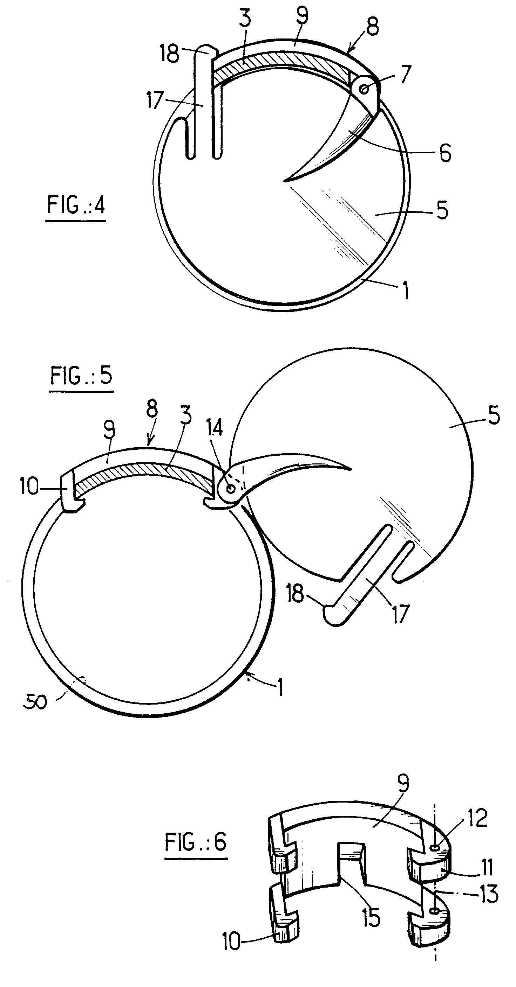

Comme on le voit mieux sur les figures 4 à 6, le support 8 comprend un corps 9 conformé pour épouser la forme de la face extérieure de la tige 3, qui a typiquement une forme arquée. Dans le mode de réalisation représenté, les dimensions horizontales du corps 9 sont sensiblement égales à celles de l'embase de la tige 3 et le corps est formé, à chacune de ses extrémités latérales opposées, avec au moins un, typiquement deux crochets 10, 11, dirigés vers la concavité du corps 9 et agencés pour venir en prise avec les bords de la tige 3 en emprisonnant cette dernière. Sur un des côtés du corps 9, les crochets (11) sont élargis et traversés par un alésage 12 à axe vertical commun 13. L'écartement vertical entre les crochets 11 est très légèrement supérieur à l'épaisseur de l'extrémité extérieure de la nervure 6 et le diamètre des alésages 12 est le même que celui du passage 7 pour le montage d'un pivot 14 constituant une articulation à axe vertical du couvercle par rapport au support 8 et, partant, au canister. La base du corps 9 du support 8 présente avantageusement une échancrure 15 qui vient coopérer, en position de montage du couvercle sur le canister, avec un saillant 16 normalement prévu sur la face extérieure de la tige 3, afin d'assurer une mise en place facile et stable du support 8 sur la tige 3.

Comme on le voit bien sur les figures 4 et 5, le couvercle 5 est avantageusement conformé pour constituer une patte d'accrochage 17 faisant saillie vers l'extérieur et terminée par un crochet 18 agencé pour venir s'agrafer élastiquement sur l'arête arrière de l'extrémité latérale du support 8 opposée au pivot 14 lorsque le couvercle 5 est en position de fermeture complète, comme représenté sur la figure 4. Pour faciliter la manutention du couvercle 5, notamment pour dégager élastiquement le crochet 18 en vue d'amener le couvercle 5 dans sa position d'ouverture représentée sur la figure 5, le bord du couvercle 5 au voisinage de la patte d'accrochage 17 (sur la gauche de la figure 4) est avantageusement prévu avec des indentations permettant sa manutention avec des gants. Le déplacement du couvercle 5 vers sa position de fermeture est effectué simplement en appuyant latéralement sur le bord du couvercle 5 opposé à la patte d'accrochage 18, l'accrochage s'effectuant automatiquement après franchissement, par le crochet 18, du bord latéral du corps 9 de support 8.

Sur la figure 2, on a représenté schématiquement une paillette 20 logée dans le réceptacle 1 avec l'inclinaison maximale qu'elle peut atteindre lorsque le couvercle 5 est fermé, par rapport à l'axe du réceptacle. On peut constater que, même si le couvercle 5 a un diamètre à peu près égal à celui de l'ouverture supérieure 50 du réceptacle 1, la paillette ne peut pas s'échapper, même lorsque le canister est plongé brusquement dans une masse de liquide.

Quoique la présente invention ait été décrite en relation avec un mode de réalisation particulier, elle ne s'en trouve pas limitée mais est au contraire susceptible de modifications et de variantes qui apparaîtront à l'homme de l'art dans la limite définie par les revendications.

## Revendications

1. Canister pour l'entreposage de paillettes dans un liquide de conservation froid, comprenant un réceptacle (1) ayant une ouverture supérieure (50), une zone d'extrémité inférieure ajourée et une tige (3) de support et de préhension, caractérisé en ce qu'il comporte un couvercle (5), supporté par un support (8) monté sur la tige (3) et déplaçable entre une première position, en regard de l'ouverture (50), et une deuxième position dégageant l'ouverture.

2. Canister selon la revendication 1, caractérisé en ce que le support (8) est monté par accrochage (10, 11) sur la tige (3).

3. Canister selon la revendication 1 ou la revendication 2, caractérisé en ce qu'il comprend des moyens (18), déverrouillables manuellement, de blocage du couvercle (5) dans sa première position.

4. Canister selon l'une des revendications précédentes, caractérisé en ce que le couvercle (5) est monté à pivotement sur le support (8) autour d'un pivot (14) d'axe parallèle à la tige (3).

5. Canister selon la revendication 4, caractérisé en ce que le pivot (14) est monté dans une première extrémité latérale (11) du support (8).

6. Canister selon la revendication 3 et la revendication 5, caractérisé en ce que les moyens de blocage comprennent des éléments (18, 9) coopérant à engagement élastique sur le couvercle (5) et la deuxième extrémité latérale (10) du support (8).

7. Canister selon l'une des revendications 2 à 6, caractérisé en ce que le support (8) comporte au moins deux griffes (10, 11) coopérant en engagement avec la tige (3).

8. Canister selon la revendication 7, caractérisé en ce que le support (8) comporte un évidement (15) coopérant avec une portion en saillie (16) de la tige (3).

9. Canister selon l'une des revendications précédentes, caractérisé en ce que le support (8) est réalisé en matériau plastique.

10. Canister selon l'une des revendications précédentes, caractérisé en ce que le couvercle (5) est réalisé en matériau plastique.

## Claims

1. Canister for storing paillettes in a cold preservation liquid, comprising a receptacle (1) having a top opening (50), a perforated bottom end area and a supporting and gripping shank (3), characterized in that it has a cover (5) supported by a support (8) mounted on the shank (3) and movable between a first position, facing the opening (50), and a second position leaving the opening clear.

2. Canister according to Claim 1, characterized in that the support (8) is mounted by hooking (10, 11) onto the rod (3).

3. Canister according to Claim 1 or Claim 2, characterized in that is comprises manually releasable means (18) for locking the cover (5) in its first position.

4. Canister according to one of the preceding claims, characterized in that the cover (5) is mounted so as to pivot on the support (8) about a pivot (14) with its axis parallel to the shank (3).

5. Canister according to Claim 4, characterized in that the pivot (14) is mounted in a first lateral end (11) of the support (8).

6. Canister according to Claim 3 and Claim 5, characterized in that the locking means comprise members (18, 9) cooperating so as to engage elastically on the cover (5) and the second lateral end (10) of the support (8).

7. Canister according to one of Claims 2 to 6, characterized in that the support (8) has at least two claws (10, 11) cooperating by engaging with the shank (3).

8. Canister according to Claim 7, characterized in that the support (8) has a recess (15) cooperating with a projecting part (16) of the shank (3).

9. Canister according to one of the preceding claims, characterized in that the support (8) is made from plastic.

10. Canister according to one of the preceding claims, characterized in that the cover (5) is made from plastic.

## Patentansprüche

1. Kanister für die Zwischenlagerung von Röhrchen in einer kalten Konservierungsflüssigkeit, mit einem Auffang (1), der eine obere Öffnung (50) hat, einem unteren gelochten Endbereich und einer Stütz- und Haltestange (3), dadurch gekennzeichnet, daß er einen Deckel (5) aufweist, der mittels eines an der Stange (3) befestigten Halters (8) abgestützt ist und zwischen einer ersten Position gegenüber der Öffnung (50) und einer zweiten, die Öffnung (50) freilegenden Position bewegbar ist.

2. Kanister nach Anspruch 1, dadurch gekennzeichnet, daß der Halter (8) durch Aufhängung (10, 11) an der Stange (3) befestigt ist.

3. Kanister nach Anspruch 1 oder 2, dadurch gekennzeichnet, daß er manuell entriegelbare Einrichtungen (18) zur Blockierung des Deckels (5) in seiner ersten Position aufweist.

4. Kanister nach einem der vorhergehenden Ansprüche, dadurch gekennzeichent, daß der Deckel (5) schwenkbar um einen Zapfen (14) mit parallel zu der Stange (3) verlaufender Achse an dem Halter (8) befestigt ist.

5. Kanister nach Anspruch 4, dadurch gekennzeichnet, daß der Zapfen (14) in einem ersten seitlichen Ende (11) des Halters (8) befestigt ist.

6. Kanister nach Anspruch 3 und 5, dadurch gekennzeichnet, daß die Einrichtungen zum Blockieren Elemente (18, 9) aufweisen, die mit dem Deckel (5) und dem zweiten seitlichen Ende (10) des Halters (8) elastisch im Eingriff sind.

7. Kanister nach einem der Ansprüche 2 bis 6, dadurch gekennzeichnet, daß der Halter (8) mindestens zwei Haken (10, 11) aufweist, die mit der Stange (3) im Eingriff sind.

8. Kanister nach Anspruch 7, dadurch gekennzeichnet, daß der Halter (8) eine Vertiefung (15) aufweist, die mit einem Vorsprung (16) der Stange (3) zusammenwirkt.

9. Kanister nach einem der vorhergehenden Ansprüche, dadurch gekennzeichnet, daß der Halter (8) aus einem Kunststoff besteht.

10. Kanister nach einem der vorhergehenden Ansprüche, dadurch gekennzeichnet, daß der Deckel (5) aus einem Kunststoff besteht.
